Europäisches Patentamt

European Patent Office

Office européen des brevets

(11) Publication number: **0 369 550**
**A2**

## (12) EUROPEAN PATENT APPLICATION

(21) Application number: 89202897.8

(51) Int. Cl.⁵: **A23D 7/00, A23C 15/16**

(22) Date of filing: 16.11.89

(30) Priority: 18.11.88 GB 8826994

(43) Date of publication of application:
23.05.90 Bulletin 90/21

(84) Designated Contracting States:
AT BE CH DE ES FR GB GR IT LI NL SE

(71) Applicant: **UNILEVER NV**
**Burgemeester s'Jacobplein 1 P.O. Box 760**
**NL-3000 DK Rotterdam(NL)**
(84) **BE CH DE ES FR GR IT LI NL SE AT**

Applicant: **UNILEVER PLC**
**Unilever House Blackfriars P.O. Box 68**
**London EC4P 4BQ(GB)**
(84) **GB**

(72) Inventor: **Norton, Ian Timothy**
**29 Croft Way**
**Rushden Northants, NN10 9EZ(GB)**
Inventor: **Brown, Charles Rupert Telford**
**92 Castle Road**
**Bedford MK40 3PS(GB)**

(74) Representative: **Dries, Antonius Johannes**
**Maria et al**
**Unilever N.V. Patent Division P.O. Box 137**
**NL-3130 AC Vlaardingen(NL)**

(54) **Food spreads.**

(57) The present invention is concerned with a spread having a fat content of less than 65% w/w, comprising a continuous fat phase and an aqeuous phase containing:

(a) essentially non-aggregated colloidal particles of denatured heat-settable protein, at least 95% of the colloidal particles having an equivalent diameter in the range of 0.1 to 30 microns, and

(b) one or more gelling agents, other than heat-settable protein, at a concentration level of at least 30%, preferably at least 60% of the crtical concentration of said gelling agent or combination of gelling agents.

The spreads according to the present invention offer the advantage that they combine a low fat content with a high stability. They do not tend to lose water on spreading, and, unlike various low fat spreads of similar fat content described in the prior art, do not have a thick mouthfeel as they destabilize rapidly in the mouth.

## FOOD SPREADS

The present invention relates to a low fat spread comprising an aqueous phase containing essentially non-aggregated colloidal particles of denatured heat-settable protein.

European patent application No. 0250623 describes salad dressings comprising a proteinaceous, water-dispersible, macrocolloid comprising substantially non-aggrregated particles of dairy whey protein coagulate having mean diameter particle size distributions, when dried, ranging from 0.1-2.0 microns, with less than about 2 percent of the total number of particles exceeding 3.0 microns in diameter.

In example 4A hazelnut-chocolate sandwich spread of the NutellaTM type is mentioned as an example of a sandwich spread in which the whey protein based composition may suitably be incorporated. On page 15 it is stated that malto dextrins may be employed to prevent the formation of large denatured protein aggregates in the denaturation step. The preferred concentration of malto-dextrins is said to be from 10%-15% by weight of the whey protein concentrate.

We have found that low fat spreads comprising an aqueous phase containing non-aggregated colloidal particles of denatured heat-settable protein and in addition an effective amount of one or more gelling agents, possess favourable properties. Here the term gelling agent is used in its usual meaning, indicating a component capable of forming an ordered three dimensional gel-network in an aqueous system, when incorporated therein at a suitable concentration level and subjected to conditions favouring the formation of such network.

Thus the present invention is concerned with a spread having a fat content of less than 65% w/w, comprising a continuous fat phase and an aqueous phase containing:

(a) essentially non-aggregated colloidal particles of denatured heat-settable protein, at least 95% of the colloidal particles having an equivalent diameter in the range of 0.1 to 30 microns, and

(b) one or more gelling agents, other than heat-settable protein, at a concentration level of at least 30%, preferably at least 50% of the critical concentration of said gelling agent or combination of gelling agent.

The spreads according to the present invention offer the advantage that they combine a low fat content with a high stability. They do not tend to loose water on spreading and, unlike various low fat spreads of similar fat content described in the prior art, do not have a thick mouthfeel as they destabilize rapidly in the mouth. The low calorie spreads according to the invention moreover offer the advantage that they are almost indistinguishable from similar spreads having a substantially higher fat content. It is believed that these favourable properties are the result of a synergistic interaction between the macrocolloidal protein particles and the gelling agent present in the aqueous phase of the spread according to the invention.

If solely a gelling agent is used to stabilize the aqueous phase of a low fat spread, high concentration levels are required to obtain a product that does not loose water on spreading, in particular if the aqueous phase consists of dispersed droplets that are relatively large (more than 10 microns) or if the aqueous phase is partially continuous. products comprising such high levels of gelling agent tend to have a rather thick mouthfeel.

The spreads according to the present invention comprise a continuous fat phase and an aqueous phase which may be either discontinuous, as found in water-in-oil emulsions or at least partially continuous, as found is so called bi-continuous products. Preferably the present spreads are of the water-in-oil type. The term water-in-oil as used here also encompasses systems in which the internal aqueous phase comprises a dispersed fat phase such as duplex emulsions of the oil-in-water-in-oil type.

Furthermore spreads of relatively high water-content, i.e. spreads comprising more than 40% by weight of aqueous phase, which spreads frequently comprise a gelling agent containing aqueous phase normally are easy discernible from spreads of lower water content and therefore deemed to be of inferior quality.

If the aqueous phase of a low fat spread merely consists of a dispersion of colloidal particles of denatured heat-settable protein, such spread tends to lose water on spreading, in particular if said aqueous phase constitutes less than 15% by weight of the aqueous phase.

The interaction between the colloidal particles of denatured heat-settable protein and the gelling agent or agents is particularly beneficial if the latter component(s) are present at a concentration level exceeding the critical concentration thereof.

The critical concentration of a gelling agent is the concentration level at which said gelling agent will start to form a gel. The critical concentration of the gelling agent in the present spread is determined in an aqueous system which has exactly the same composition as the aqueous phase to be incorporated into the spread (with the exception of course of the water content and the concentration of said gelling agent which have to be varied to establish the critical concentration).

The critical concentration of a gelling agent in a particular composition can be calculated from measurements of the shear modulus of a series of samples containing different concentrations of gelling agent, as described in Br. Polymer J. 17 (1985), 164. If a mixture of gelling agents is used in the aqueous phase of the present low fat spread, then the critical concentration of said mixture is determined in a manner analogous to the procedure described above. The composition of the mixture of gelling agents is kept constant and the weight concentration of said mixture is varied as if it consisted of only one single gelling agent.

Spreads having a very favourable texture and stability are obtained if the gelling agent or gelling agents employed are selected from the group consisting of: gelatin, kappa-carrageenan, iota-carrageenan, agar, alginate and furcelleran.

The term heat settable protein is used here to specify a particular type of protein. The term heat-settable therefore is not used here to indicate that a protein is in an undenatured state. Heat-settable proteins have in common that, when dispersed in water in an undenatured form at the right concentration level, they are capable of forming a gel structure upon heat denaturation. The aqueous phase of the present spread preferably comprises from 2 to 15 wt.% of heat settable protein.

Preferably most of the heat settable protein present in the aqueous phase of the present spread is denatured, most preferably at least 75% of the heat settable protein in said composition is in denatured state.

The degree of denaturation of the heat settable protein in the aqueous composition may suitably be determined by means of Differential Scanning Calorimetry. The heat settable protein used in the present process is preferably selected from the group consisting of whey protein, egg-albumin, sotrage protein and blood albumin.

In an even more preferred embodiment of the present invention the heat-settable protein is a storage protein. A heat-settable storage protein as referred to in this application is a protein of plant origin that is stored at relatively high concentration levels in particular plant tissues and which, when dissolved in water in an undenatured state and at an appropriate concentration level, is capable of forming a three dimensional gel network upon heat denaturation. Examples of suitable storage protein compositions are: soya protein, rape see protein, cottonseed protein, sunflower protein, etc. Preferably the heat-settable protein in the present spread is soya protein or a fraction thereof. It is observed that the term soya protein encompasses natural soya protein consisting of a mixture of different proteins.

The colloidal protein based particles in the present spread preferably essentially consist of denatured heat-settable protein, more preferably of denatured heat-settable storage protein. Depending on the method of preparation and the ingredients used, however, small amounts of other components may be incorporated in the colloids. In general, the colloids comprise less than 40 wt.%, more preferably less than 20 wt% of components other than heat-settable protein.

Since the benefits of the present invention are particularly appreciated in spreads comprising a limited amount of fat, preferably the present spread comprises from 45-92 wt.%, more preferably from 65-90 wt.% of an aqueous phase.

The present spreads appear to have a very smooth texture if the colloidal particles are relatively small. Thus, preferably at least 95% of the colloidal particles the essentially non-aggregated colloidal particles of denatured heat-settable protein have an equivalent diameter in the range of 0.1 to 10 microns, more preferably in the range of 0.1-5 microns.

The equivalent diameter distribution of the colloidal denatured protein particles may suitably be established from microscopical images. Although such may be done by hand, in order to obtain more reproducible results it is preferred to determine the particle size distribution by means of an image analyzing computer. Of course the magnification applied should be suitable for properly determining the diameter-distribution in the present compositions a magnification of x800 appeared to be appropriate.

The present spreads appear to be particularly stable if the aqueous phase has a yield stress of at least 10 kN/m² at 5°C. As it is not feasible to determine the yield stress of the aqueous phase in the present spread itself, the yield stress of the aqueous phase is suitably measured before it is incorporated in the spread. In order to get a proper impression of the yield stress of the aqueous phase in the product, it is advisable to subject the aqueous phase to the same temperature conditions (under quiescent conditions) as applied during incorporation in the spread before measuring the yield stress.

Alternatively the yield stress of the aqueous phase as from 45-92 wt.%, more preferably from 65-90 wt.% of an aqueous phase.

The present spreads appear to have a very smooth texture if the colloidal particles are relatively small. Thus, preferably at least 95% of the colloidal particles the essentially non-aggregated colloidal particles of denatured heat-settable protein have an equivalent diameter in the range of 0.1 to 10 microns, more preferably in the range of 0.1-5 microns.

The equivalent diameter distribution of the colloidal denatured protein particles may suitably be established from microscopical images. Although such may be done by hand, in order to obtain more reproducible results it is preferred to determine the particle size distribution by means of an image analyzing computer. Of course the magnification applied should be suitable for properly determining the equivalent diameter distribution. For determining the diameter-distribution in the present compositions a magnification of x800 appeared to be appropriate.

The present spreads appear to be particularly stable if the aqueous phase has a yield stress of at least 10 kN/m$^2$ at 5°C. As it is not feasible to determine the yield stress of the aqueous phase in the present spread itself, the yield stress of the aqueous phase is suitably measured before it is incorporated in the spread. In order to get a proper impression of the yield stress of the aqueous phase in the product, it is advisable to subject the aqueous phase to the same temperature conditions (under quiescent conditions) as applied during incorporation in the spread before measuring the yield stress.

Alternatively the yield stress of the aqueous phase as present in a spread may be determined by separation such aqueous phase by heating it to a sufficiently high temperature so as to melt all the fat and centrifuging.

The yield stress whenever referred to in this application is determined by measuring the force at break at 5°C, using the procedure described in J. Mol. Biol. (1980) 138, 349-362, and dividing the measured force by the cross sectional area. In the present examples the cross sectional area employed was 3.14 10$^{-4}$ m$^2$.

In a preferred embodiment of the present invention the aqueous phase essentially consists of dispersed gelled water droplets. More preferably the aqueous phase essentially consists of gelled water droplets that have basically the same composition.

The present invention is further illustrated by means of the following examples:

## Example 1

A spread comprising 40% fat was prepared by blending an aqueous phase and fat phase of following composition:

| Fat Phase (40%) | |
| --- | --- |
| Soybean oil | 49 % |
| Coconut oil | 13 % |
| Hardened soybean oil (m.p. 41°C) | 17 % |
| Interesterified blend of coconut oil (33%) and soybean oil hardened to 41°C (67%) | 20 % |
| Hymono 8903 | 0.5% |
| Bolec Z | 0.5% |

| Aqueous Phase (60%) | |
| --- | --- |
| Gelatin (Bloom 270) | 3.5% |
| Skimmilk powder | 1.5% |
| NaCl | 1.5% |
| Potassium-sorbate | 0.2% |
| Macrocolloidal protein dispersion | 33 % |
| Water - pH adjusted to 5.8 | 60.3% |

The macrocolloidal protein dispersion was obtained by diluting a whey protein concentrate to a protein content of 20% by weight and subsequently passing the aqueous composition so obtained through a high speed churn, operated at 3000 rpm, while heating to approximately 95°C at a throughput of 15g/min. The residence time of the composition in the churn was about 2 minutes and 15 seconds.

The blending of the above phases and subsequent plastification was carried out by combining the two phases and subsequently passing them through a scraped surface heat exchanger (1000 rpm) a crystallizer unit (1400 rpm) a scraped surface heat exchanger (1000 rpm) an yet another crystallizer (1000 rpm). The jacket temperature of the scraped surface heat exchangers wass 10°C and the throughput was 50 g/min.

The product obtained was reminiscent of a spread containing 60% fat and did not lose water on spreading.

Example 2

Example 1 was repeated with the exception that the aqueous phase composition was as follows:

| Aqueous Phase (60%) | |
|---|---|
| Gelatin (Bloom 270) | 2 % |
| Skimmilk powder | 1.5 % |
| NaCl | 1.0 % |
| Potassium-sorbate | 0.2 % |
| Macrocolloidal protein dispersion | 66.3 % |
| Water - pH adjusted to 5.8 | 29 % |

The macrocolloid protein dispersion was obtained by dilution of a whey protein concentrate to a protein content of 20% by weight and further processing the aqueous composition thus obtained as in Example 1.

The spread obtained did not lose water on spreading and was found to be comparable to spreads containing 80% fat.

Example 3

A spread comprising 40% fat was prepared by blending an aqueous phase and fat phase of following composition:

| Fat Phase (40%) | |
|---|---|
| Soybean oil hardened to 38°C | 27 % |
| Sunflower oil | 55 % |
| Interesterified blend of palm oil (40%) and Palmkernel oil (60%) | 17 % |
| Hymono 8903 | 0.5% |
| Bolec Z | 0.5% |

| Aqueous Phase (60%) | |
|---|---|
| Gelatin (Bloom 270) | 2.5 % |
| Skimmilk powder | 2 % |
| NaCl | 1 % |
| Potassium-sorbate | 0.2 % |
| Macrocolloidal protein dispersion | 20 % |
| Water - pH adjusted to 5.8 | 74.3 % |

The macrocolloid protein dispersion was obtained by diluting a soya isolate in water at neutral pH and at a concentration level of 15% by weight and clarifying the dispersion using centrifugation at 20,000 g for 20 minutes. The clear solution was concentrated to a protein content of about 12% by means of ultrafiltration. The retentate was further processed to a macrocolloid protein dispersion as described in Example 1 except that the shearing conditions were maintained while cooling down to 25°C.

A spreadable plastic spread was obtained by employing the process described in Example 1. The product obtained was stable did not exhibit water loss on spreading and was found to be similar to a 50% fat product.

The experiment was repeated using a macrocolloidal dispersion of whey protein prepared as in Example 1 with the exception that the whey protein concentrate was diluted to a protein content of 12% by weight. The product thus obtained was of a similar quality as the product containing soya protein based macrocolloids.

Example 4

A spread comprising 40% fat was prepared from a fat phase as described in Example 3 and an aqueous phase of the following composition:

| Aqueous Phase (60%) | |
|---|---|
| Gelatin (Bloom 270) | 2 % |
| Skimmilk powder | 1 % |
| NaCl | 1.5 % |
| Potassium-sorbate | 0.2 % |
| Macrocolloidal protein dispersion | 30 % |
| Water - pH adjusted to 5.8 | 65.3 % |

Example 5

A fat spread with very low fat content was prepared by blending an aqueous phase and fat phase of the following compositions.

| Fat Phase (27%) | |
|---|---|
| Soybean oil | 48.7 % |
| Coconut oil | 12.9 % |
| Hardened soybean oil (38° C) | 16.95 % |
| Interesterification Blend of Coconut oil (33%) and Hardened Soybean oil (38° C) (67%) | 19.95 % |
| Hymono 4404 | 1.5 % |
| Beta carotene | 0.008 % |
| Flavour | 0.04 % |

| Aqueous Phase (73%) | |
|---|---|
| Gelatin (270 Bloom) | 5.0 % |
| Sodium Chloride | 1.5 % |
| Potassium Sorbate | 0.2 % |
| Macrocolloid protein dispersion | 67.0 % |
| Water - pH adjusted to 5.5 with Sodium Hydroxide | 26.3 % |

The macrocolloidal protein dispersion was obtained by diluting a whey protein concentrate to a protein concentration of 20% by weight and subsequently passing the aqueous composition through a high speed churn, operated at 6000 rpm while heating the composition to about 95° C at a throughput of 30 g/min. The residence time of the composition in the churn was about 1 minute.

Blending of the fat and aqueous phases and their subsequent plastification was achieved by first mixing the hot macrocolloidal protein dispersion with water in which the remaining aqueous phase ingredients had been dissolved, followed by titration to pH 5.5 and combination with the fat phase in a stirred, warmed tank to form an oil in water pre-mix. The pre-mix was pumped through a scraped surface heat exchanger (A-Unit) operated at 500 rpm and with a jacket temperature of 0°C, through a second A-Unit (500 rpm, Jacket = -2°C), through a crystallizing unit (C-Unit) operated at 800 rpm with a jacket temperature of -2°C and finally through a second C-Unit (1400 rpm, Jacket = 19°C) before being collected in tubs and stored at 5°C. The product temperatures achieved under steady state conditions were A1 = 5.5, A2 = 4.0, C1 = 5.5, C2 = 20.5°C. The product made under these conditions was fat continuous as judged by measurement of conductivity and fat continuity was maintained while the throughput was varied from 20 to 150 g/min. (Table 1)

Table 1

| Throughput g/min | Conductivity us/cm | Aqueous Phase D (3,3) Dropsize |
|---|---|---|
| 20 | 1.9 | 36 |
| 53 | 3.0 | 37 |
| 150 | 2.1 | 50 |

A soft fat spread was formed which spread smoothly at 5°C without losing water and which had an oral melt reminiscent of a 40% fat product.

Example 6

A spread comprising 40% fat was prepared by blending an aqueous phase with a fat phase of the following compositions:

| Fat Phase (40%) | |
|---|---|
| Clarified butter fat | 39.0 % |
| Hymono 8903 | 0.2 % |
| Bolec 2 | 0.2 % |
| Beta-carotene | 0.1 % |

| Aqueous Phase (60%) | |
|---|---|
| Gelatin (270 Bloom) | 2.0 % |
| Potassium Sorbate | 0.10 % |
| Macrocolloid protein dispersion - pH adjusted to 5.5 with Sodium Hydroxide | 58.0 % |

The macrocolloidal protein dispersion was obtained by diluting a whey protein concentrate to a protein concentration of 12% by weight and subsequently passing the aqueous composition through a high speed churn, operated at 6000 rpm while heating the composition to about 95°C at a throughput of 15 g/min. The residence time of the composition in the churn was about 2 minutes.

Blending of the fat and aqueous phases and their subsequent plastification was achieved by first mixing the hot macrocolloidal protein dispersion with water in which the remaining aqueous phase ingredients had been dissolved, followed by titration to pH 5.5 and combination with the fat phase in a stirred, warmed tank to form an oil in water pre-mix. The pre-mix was pumped through a scraped surface heat exchanger (A-Unit) operated at 500 rpm and with a jacket temperature of 3°C, through a crystallizing unit (C-Unit) operated at 1400 rpm with no temperature control applied through a second A-unit (500 rpm, Jacket = 10°C) before being passed through a cooling coil (B-Unit), collected in tubs and stored at 5°C.

The product made under these conditions was stable on spreading with no release of water. The taste was acceptable and not too acidic. The oral melt gas thick and was reminiscent of a 60% fat spread.

In a control experiment, the aqueous phase composition was modified by replacing the macrocolloid protein dispersion with water and the aqueous and fat phases combined and processed into spread as above. The product obtained was unstable and exhibited unacceptable loss of water upon spreading.

The macrocolloidal protein dispersion was prepared using the method described in Example 1 with the exception that the whey protein concentrate was diluted to a protein content of 12% by weight and that the high speed churn was operated at 4000 rpm.

The processing conditions applied in the preparation of the spread were as described in Example 1. The product obtained did not lose water on spreading and was similar to a 60% fat product.

Example 7

A spread containing 40% fat was prepared by blending the fat phase described in Example 3 with an aqueous phase of the following compositions:

| Aqueous Phase (60%) | |
| --- | --- |
| Kappa Carrageenan (x6960) | 3 % |
| NaCl | 1.8 % |
| Macrocolloidal protein dispersion | 20% |
| Water - pH adjusted to 5.2 | 75.2 % |

The macrocolloidal protein dispersion had a whey protein content of 20% by weight and was prepared via the procedure described in Example 1.

The equipment used as well as the processing conditions employed were also as described in Example 1. The product obtained was stable, and did not lose any water on spreading.

Comparative Example A

A spread comprising 40% fat was prepared by blending the fat phase described in Example 1 with an aqueous phase of the following compositions:

| Aqueous Phase | |
| --- | --- |
| NaCl | 1.8 & |
| Potassium-sorbate | 0.2 % |
| Macrocolloidal protein dispersion - pH adjusted to 6.0 | 98 % |

The processing equipment used and processing conditions employed were as described in Example 1. The product obtained showed loss of water on spreading.

**Claims**

1. Spread having a fat content of less than 65% w/w, comprising a continuous fat phase and an aqueous phase containing:

(a) essentially non-aggregated colloidal particles of denatured heat-settable protein, at least 95% of the colloidal particles having an equivalent diameter in the range of 0.1 to 30 microns, and

(b) one or more gelling agents, other than heat-settable protein, at a concentration level of at least 30% of the critical concentration of said gelling agent or combination of gelling agents.

2. Spread according to claim 1, wherein the aqueous phase contains one or more gelling agents, other than heat-settable protein, at a concentration level of or above the critical concentration of said gelling agent or combination of gelling agents.

3. Spread according to claim 1 or 2, wherein the aqueous phase comprises at least one gelling agent selected from the group consisting of: gelatin, kappa-carrageenan, iota-carrageenan, agar, alginate and furcelleran.

4. Spread according to any one of claims 1-3, wherein the aqueous phase comprises from 2 to 15 wt.% of the heat settable protein.

5. Spread according to any one of claims 1-4, wherein the heat-settable protein is a storage protein or a fraction thereof.

6. Spread according to any one of claims 1-5, wherein the spread comprises from 45-92 wt.% of an aqueous phase.

7. Spread according to any one of claims 1-6, wherein the aqueous phase has a yield stress of at least 10 $k^N/m^2$ at 5° C.

8. Spread according to any one of claims 1-7, wherein the aqueous phase essentially consists of dispersed gelled water droplets.

9. Spread according to claim 8, wherein the dispersed water droplets that have basically the same composition.

10. Process for the preparation of a food spread according to claim 1 which comprises mixing aqueous and fat phases to form an emulsion and chilling and working the emulsion to form a plastic compostion, characterised in that the aqueous phase comprises of dispersion of essentially non-aggregated colloidal particles of denatured heat-settable protein at least 95% of the colloidal particles having an equivalent diameter in the range 0.1 to 30 micron and 1 or more gelling agents at a concentration level at least 30% of the critical concentration thereof.

11. Process according to claim 1 in which the fat phases first dispersed in the queous phase.